# EUROPÄISCHE PATENTANMELDUNG

(11) **EP 3 722 032 A1**
(43) Veröffentlichungstag der Anmeldung: **14.10.2020**
(21) Anmeldenummer: 20167875.2
(22) Anmeldetag: 03.04.2020
(51) Int. Cl.: B23B 31/02, B23B 31/20, B23F 23/06

(54) **SPANNVORRICHTUNG MIT PLANANLAGE**

(30) Priorität: 04.04.2019 DE 102019108817
(71) Anmelder: Klingelnberg AG, 8050 Zürich (CH)
(72) Erfinder: Weber, Jürgen, 42499 Hückeswagen (DE)
(74) Vertreter: Heusch, Christian

(57) **Zusammenfassung**

Spannvorrichtung (20) mit einer Aufnahmeöffnung, die konzentrisch zu einer Werkstück-Spindelachse (A) angeordnet ist, wobei
- die Spannvorrichtung (20) zum Einspannen eines Zahnradwerkstücks (1) ausgelegt ist, das einen Kopfbereich (2) und eine Welle (3) umfasst,
- die Spannvorrichtung (20) eine ringförmige Plananlagefläche umfasst, die
- konzentrisch zu der Werkstück-Spindelachse (A) angeordnet ist,
- sich in einem werkstückseitigen Endbereich (Eb1) der Spannvorrichtung (20) befindet, und
- die im Wesentlichen senkrecht zur Werkstück-Spindelachse (A) verläuft,
wobei in dem werkstückseitigen Endbereich (Eb1) mindestens eine umlaufende Nut (31) vorgesehen ist, die sich von einer Aussenfläche (29) der Spannvorrichtung (20) radial in Richtung der Werkstück-Spindelachse (A) erstreckt und die der Spannvorrichtung (20) im Bereich der Plananlagefläche eine Elastizität verleiht.

## Beschreibung

Die Erfindung betrifft Spannvorrichtungen für Zahnradwerkstücke, insbesondere zur Verwendung in Zahnradmaschinen zum spanenden Bearbeiten von Zahnrädern.

### Stand der Technik

Bei der spanenden Bearbeitung von Zahnrädern können auf den Oberflächen der Zahnflanken Welligkeiten auftreten, deren Rauheit typischerweise im µm-Bereich liegt. Der Aufwand, der betrieben werden muss, um wellige Zahnflanken maschinell nachzubearbeiten ist häufig relativ gross.

Das Vermeiden solcher Welligkeiten ist ein Gegenstand des Gebrauchsmusters DE202009007821U1. In diesem Gebrauchsmuster geht es konkret um einen Ansatz, der es ermöglicht Schwingungen zu dämpfen, die an einem in einer Bearbeitungsmaschine eingespannten Zahnradwerkstück auftreten können. Laut der Beschreibung dieses Gebrauchsmusters ergeben sich die Schwingungen aus dem dynamischen Zusammenwirken des Verzahnungswerkzeugs mit dem in einer Spannvorrichtung eingespannten Zahnradwerkstück. Es kommt an der Spannvorrichtung ein flaches, ringförmiges vibrationsdämpfendes Element zu Einsatz, um die auftretenden Schwingungen zu dämpfen.

Trotz dieser beispielhaft genannten Maßnahme, die zum Reduzieren von Welligkeiten konzipiert wurde, gibt es jedoch vor allem beim spanenden Bearbeiten der Zahnflanken von Kegelradwerkstücken immer wieder Kegelräder, deren Zahnflanken auch weiterhin Welligkeiten zeigen.

Von daher liegt der Erfindung die Aufgabe zugrunde, eine Lösung anzubieten, die es erlaubt die besagte Welligkeit der Zahnflanken bei der spanenden Bearbeitung von Zahnrädern mit Verzahnwerkzeugen, insbesondere bei der spanenden Bearbeitung von Kegelrädern, zu verhindern oder weiter zu reduzieren.

Die Aufgabe wird erfindungsgemäß durch eine Vorrichtung gemäss Patentanspruch 1 gelöst.

Erfindungsgemäss ist diese Aufgabe durch eine Spannvorrichtung mit einer Aufnahmeöffnung gelöst, die konzentrisch zu einer Werkstück-Spindelachse angeordnet ist, wobei
- die Spannvorrichtung zum Einspannen eines Zahnradwerkstücks ausgelegt ist, das einen kegelförmigen Kopfbereich mit Verzahnung und eine Welle oder einen Schaft umfasst,
- die Spannvorrichtung eine ringförmige Auflagefläche umfasst,
   - die konzentrisch zu der Werkstück-Spindelachse angeordnet ist,
   - die sich in einem werkstückseitigen Endbereich der Spannvorrichtung befindet, und
   - die im Wesentlichen senkrecht zur Werkstück-Spindelachse verläuft.

Die Spannvorrichtung zeichnet sich dadurch aus, dass in dem werkstückseitigen Endbereich mindestens eine umlaufende Nut als Einstich vorgesehen ist, die sich von einer Aussenfläche der Spannvorrichtung radial in Richtung der Werkstück-Spindelachse und/oder die sich von einer Innenfläche der Spannvorrichtung in Bezug zu der Werkstück-Spindelachse radial nach aussen erstreckt.

Bevor ein Ansatz zum Lösen der Aufgabenstellung gefunden werden konnte, waren zahlreiche Untersuchungen der Bearbeitungsschritte und der Oberflächenbeschaffenheit der Flanken von Zahnradwerkstücken erforderlich.

Dabei konnte gezeigt werden, dass die Welligkeiten vor allem bei der Trockenbearbeitung von Zahnradwerkstücken auftreten. Weitergehende Untersuchungen haben dann bestätigt, dass es einen direkten Zusammenhang zwischen dem grossen Wärmeeintrag, der beim Trockenbearbeiten auftritt, und dem Auftreten der Welligkeit gibt.

Eine Ursache wurde darin gesehen, dass sich das Zahnradwerkstück minimal aus der Aufspannung zu lösen schien. Um dem entgegen zu wirken, wurde versucht während der Verzahnungsbearbeitung das Zahnradwerkstück in der Spannvorrichtung nachzuspannen. Mit diesem Ansatz konnte jedoch keine deutliche Verbesserung erzielt werden.

Weiterführende Untersuchungen haben dann gezeigt, dass die erwähnte Welligkeit dadurch entsteht, dass das Zahnradwerkstück bei der spanenden Bearbeitung in Torsionsschwingungen versetzt wird. Diese Torsionsschwingungen zeigen sich im Übergangsbereich zwischen dem Kopfbereich und der Welle/dem Schaft des Zahnradwerkstücks.

Es konnte hergeleitet werden, dass sich diese Torsionsschwingungen vor allem dann ergeben, wenn sich das Zahnradwerkstück aufgrund der spanenden Bearbeitung deutlich erwärmt. Wenn das Zahnradwerkstück mit seiner Welle bzw. dem Schaft in einer Spannvorrichtung eingespannt ist, so kann sich die Welle bzw. der Schaft nur in axialer Richtung ausdehnen. Das Ausdehnen in axialer Richtung bewirkt eine kleine (im Bereich weniger Mikrometer) axiale Verlagerung des Kopfbereichs des Zahnradwerkstücks. Dadurch wird die Planauflage, die vorher zwischen einem Axialanlagenabsatz des Kopfbereichs und einer Auflagefläche der Spannvorrichtung bestand, reduziert und der Kopfbereich kann durch das Verzahnwerkzeug zu Torsionsschwingungen angeregt werden.

Durch diese Torsionsschwingungen ergeben sich sehr kleine Versetzungen zwischen dem Verzahnwerkzeug und dem Zahnradwerkstück, was wiederum zu der Ausbildung der erwähnten Welligkeit führen kann.

An diesem Punkt setzt die Erfindung an, in dem sie durch das Anbringen einer elastischen Plananlage diese Schwingungszustände im Kopfbereich des Zahnradwerkstücks verhindert oder stark dämpft.

Die Erfindung lässt sich auf Spannvorrichtungen anwenden, die einen Grundkörper mit einer Aufnahmeöffnung zur Aufnahme der Welle oder des Schaftes eines Zahnradwerkstücks umfassen. Bei diesen Ausführungsformen kann die umlaufende Nut im werkstückseitigen Bereich des Grundkörpers vorgesehen sein.

Die Erfindung lässt sich auf Spannvorrichtungen anwenden, die ein Nasenstück (auch Zentrierbüchse genannt) mit einer zentralen Aufnahmeöffnung umfassen. Bei diesen Ausführungsformen kann die umlaufende Nut im werkstückseitigen Bereich des Nasenstücks vorgesehen sein. Vorzugsweise umfassen derartige Spannvorrichtungen zusätzlich zu dem Nasenstück auch einen Grundkörper mit einer zentralen Aufnahmeöffnung zur Aufnahme eines Zahnradwerkstücks. In diesem Fall sitzt das Nasenstück zwischen dem Grundkörper und dem Zahnradwerkstück.

Bei allen Ausführungsformen kann in einem werkstückseitigen Endbereich des Grundkörpers oder des Nasenstücks eine kegelförmige, äussere Mantelfläche vorhanden sein, wobei sich die umlaufende Nut ausgehend von dieser Mantelfläche radial als Ausseneinstich in Richtung der Werkstück-Spindelachse erstreckt.

Zusätzlich oder alternativ kann bei allen Ausführungsformen in einem werkstückseitigen Endbereich des Grundkörpers oder des Nasenstücks eine Innenfläche vorhanden sein, wobei sich die umlaufende Nut ausgehend von dieser Innenfläche in Bezug zu der Werkstück-Spindelachse als Inneneinstich radial nach aussen erstreckt.

Bei allen Ausführungsformen sollte es im Bereich der Plananlage (d.h. im Bereich eine Anschlagebene) einen Materialbereich geben, der sich nicht verformt, um so ein definiertes Einbaumass bzw. Einspannmass zu gewährleisten. Dieser nicht verformbare Materialbereich dient quasi als exakt definierter Anschlag für die Ferse des Zahnradwerkstücks beim Einschieben der Welle/des Schaftes des Zahnradwerkstücks in die Aufnahmeöffnung. Die Ferse wird daher auch als Axialanlagenabsatz am Zahnradwerkstück bezeichnet.

Vorzugsweise umfassen alle Ausführungsformen eine Plananlagenkontrolle, die zum Kontrollieren der Plananlage des Zahnradwerkstücks an der Spannvorrichtung während der spanenden Bearbeitung dient.

Weitere vorteilhafte Ausführungsformen sind den abhängigen Patentansprüchen zu entnehmen.

### ZEICHNUNGEN

Ausführungsbeispiele der Erfindung werden im Folgenden unter Bezugnahme auf die Zeichnungen näher beschrieben. Es zeigen:
- **FIG. 1**: eine schematische Vorderansicht einer Verzahnmaschine, in der die erfindungsgemäße Spannvorrichtung eingesetzt werden kann;
- **FIG. 2A**: eine perspektivische Explosionsansicht einer ersten beispielhaften Spannvorrichtung zum Spannen eines Zahnradwerkstücks in Form eines Kegelradritzels mit Welle;
- **FIG. 2B**: eine vollständige Schnittansicht entlang der Spindelachse der Aufspannung nach Fig. 2A;
- **FIG. 2C**: eine schematisierte Teilschnittansicht einer ähnlichen erfindungsgemäßen Spannvorrichtung, wobei die Elemente der Spannvorrichtung als solche in einem Teilschnitt entlang der Spindelachse gezeigt sind;
- **FIG. 3A**: eine Teilschnittansicht einer zweiten beispielhaften Spannvorrichtung zum Spannen eines anderen Zahnradwerkstücks in Form eines Kegelradritzels mit Welle, wobei die Elemente der Spannvorrichtung als solche in einem Teilschnitt entlang der Spindelachse gezeigt sind;
- **FIG. 3B**: eine vergrösserte Schnittansicht eines Nasenstücks der Spannvorrichtung der Fig. 3A, wobei ein nicht gespannter Zustand in einem Teilschnitt entlang der Spindelachse dargestellt ist;
- **FIG. 3C**: einen vergrösserten Ausschnitt der Fig. 3A, wobei ein Zustand mit nicht gespanntem Zahnradwerkstück dargestellt ist, wobei die Elemente der Spannvorrichtung als solche in einem Teilschnitt entlang der Spindelachse gezeigt sind;
- **FIG. 3D**: einen vergrösserten Ausschnitt der Spannvorrichtung nach Fig. 3A, wobei ein Zustand mit gespanntem Zahnradwerkstück dargestellt ist, wobei die Elemente der Spannvorrichtung als solche in einem Teilschnitt entlang der Spindelachse gezeigt sind;
- **FIG. 4A**: einen vergrösserten Ausschnitt eines Bereichs einer weiteren Spannvorrichtung;
- **FIG. 4B**: einen vergrösserten Ausschnitt eines Bereichs einer weiteren Spannvorrichtung;
- **FIG. 4C**: einen vergrösserten Ausschnitt eines Bereichs einer weiteren Spannvorrichtung;
- **FIG. 4D**: einen vergrösserten Ausschnitt eines Bereichs einer weiteren Spannvorrichtung;
- **FIG. 5A**: eine schematische Schnittansicht des werkstücknahen Bereichs einer weiteren Spannvorrichtung, wobei ein nicht gespannter Zustand dargestellt ist;
- **FIG. 5B**: eine schematische Schnittansicht des werkstücknahen Bereichs einer weiteren Spannvorrichtung, wobei ein nicht gespannter Zustand dargestellt ist;
- **FIG. 5C**: eine schematische Schnittansicht des werkstücknahen Bereichs einer weiteren Spannvorrichtung, wobei ein nicht gespannter Zustand dargestellt ist.

### Detaillierte Beschreibung

Im Zusammenhang mit der vorliegenden Beschreibung werden Begriffe verwendet, die auch in einschlägigen Publikationen und Patenten Verwendung finden. Es sei jedoch angemerkt, dass die Verwendung dieser Begriffe lediglich dem besseren Verständnis dienen sollen. Der erfinderische Gedanke und der Schutzumfang der Ansprüche sollen durch die spezifische Wahl der Begriffe nicht in der Auslegung eingeschränkt werden. Die Erfindung lässt sich ohne weiteres auf andere Begriffssysteme und/oder Fachgebiete übertragen. In anderen Fachgebieten sind die Begriffe sinngemäss anzuwenden.

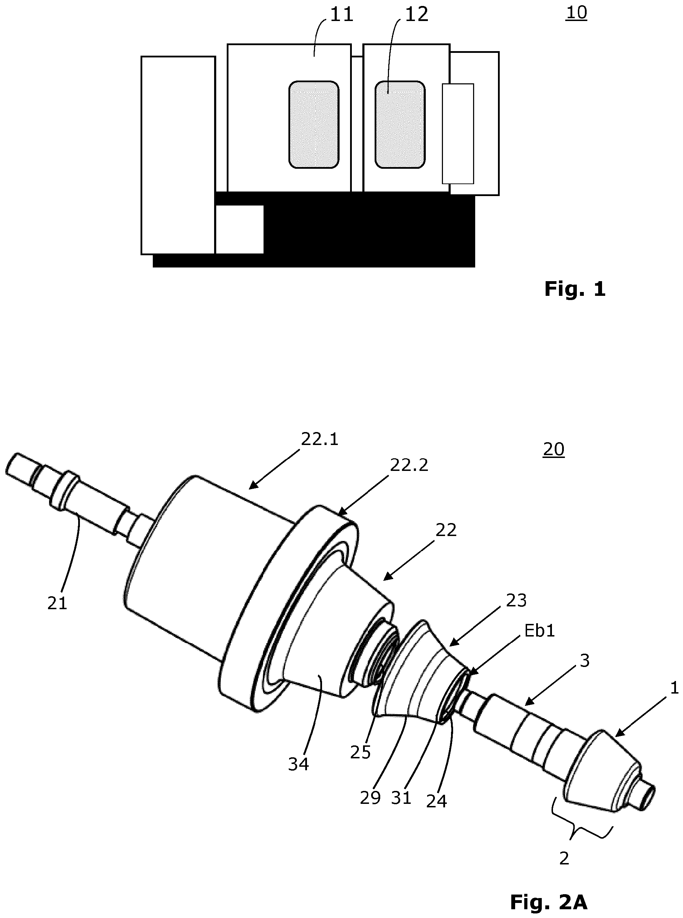

In Fig. 1 ist eine schematisierte Ansicht einer beispielhaften (Zahnrad-)Maschine 10 gezeigt. Bei der Maschine 10 handelt es sich um eine Verzahnungsmaschine, die zum Bearbeiten der Verzahnung von Zahnradwerkstücken ausgelegt ist. Der Bearbeitungsraum in dem Zahnradwerkstücke bearbeitet werden kann sich hinter einer Verkleidung 11 mit Sichtfenster 12 befinden.

Die Zahnradmaschine 10 ist speziell zum spanenden Bearbeiten der Zahnflanken von Zahnradwerkstücken 1 mit einem Verzahnwerkzeug ausgelegt und weist eine Spannvorrichtung 20 zum Aufspannen eines zu bearbeitenden Zahnradwerkstücks 1 auf. Eine beispielhafte Spannvorrichtung 20 ist in Fig. 2A in perspektivischer Form gezeigt, wobei hier nur die wesentlichen Elemente mit Bezugszeichen versehen sind.

Wie der Explosionsdarstellung der Fig. 2A zu entnehmen ist, kann ein Zahnradwerkstück 1 einen kegelförmigen Kopfbereich 2 und eine Welle oder einen Schaft 3 umfassen. Im Kopfbereich 2 befinden sich die Zahnflanken (nicht gezeigt), die zu bearbeiten sind, oder es werden im Kopfbereich 2 die Zahnflanken aus dem Material des Zahnradwerkstücks 1 herausgearbeitet.

Die Spannvorrichtung 20 umfasst hier einen Spannvorrichtungsgrundkörper 22 und ein Nasenstück 23, um das Zahnradwerkstück 1 (hier ein Kegelradritzel mit Ritzelschaft 3) aufspannen zu können. Das ringförmige Nasenstück 23 ist mit dem Grundkörper 22 verbunden und der Ritzelschaft 3 wird in die Zentralbohrung 24 des Nasenstücks 23 und die Zentralbohrung 25 des Grundkörpers 22geschoben. Dann wird der Ritzelschaft 3dort festgespannt. Das Nasenstück 23 dient einerseits als Zentrierbüchse und andererseits als Adapter. Durch die Wahl des geeigneten Nasenstücks 23 ist eine Form- und/oder Grössenanpassung möglich.

Die Spannvorrichtung 20 kann zum Beispiel mit einem Aussenkonus 22.1 in einer konischen Aufnahmeöffnung der Werkstückspindel (nicht gezeigt) der Maschine 10 eingesetzt und dort mittels Schrauben befestigt werden. Die entsprechenden Schraubenlöcher können z.B. an dem umlaufenden Flansch 22.2 des Grundkörpers 22 vorgesehen sein.

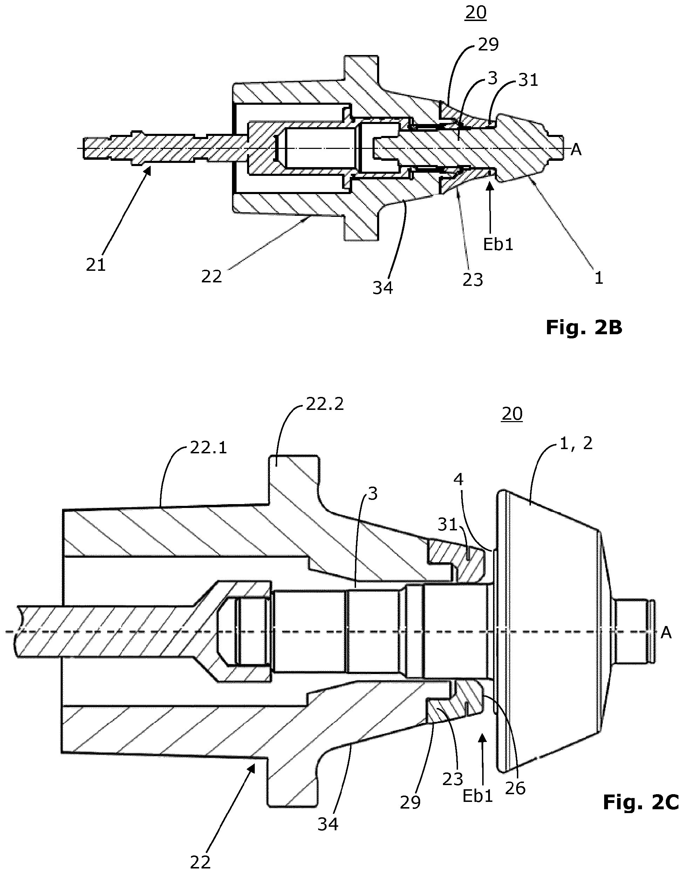

Die Spindelachse der Werkstückspindel trägt in Fig. 2B das Bezugszeichen A. Da alle wesentlichen Elemente im montierten/gespannten Zustand koaxial zu dieser Spindelachse A verlaufen, wird im Folgenden stets auf diese Achse A Bezug genommen. Außerdem wird ein sogenannter werkzeugseitiger Bereich erwähnt. Bei dem werkzeugseitigen Bereich handelt es sich um den Bereich der Spannvorrichtung 20, der nahe am oder direkt am Zahnradwerkstück 1 liegt.

Das Nasenstück 23 hat einen ringförmigen Anschlussflansch 26 mit einer planen ringförmigen Fläche (axiale Flanschfläche, ringförmige Auflagefläche oder Plananlagefläche genannt), wie in der stark schematisierten Darstellung der Fig. 2C zu erkennen ist. Zwischen dem Nasenstück 23 und der Ferse 4 des Zahnradwerkstücks 1 ist in Fig. 2C ein Luftspalt gezeigt, um den Anschlussflansch 26 zeigen zu können. Im gespannten Zustand liegt ein Bereich der Ferse 4 und diese Plananlagefläche 26 plan aufeinander.

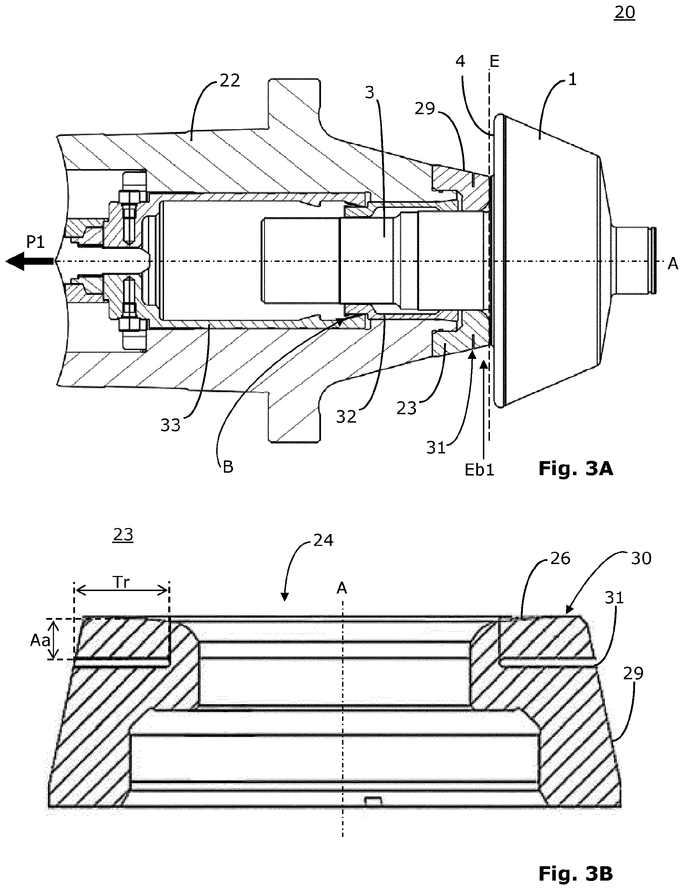

An dem Nasenstück 23 ist bei allen Ausführungsformen die ringförmige Plananlagefläche 26 federnd ausgelegt, wie im Folgenden anhand einer weiteren Ausführungsform beschrieben wird. Diese weitere Ausführungsform ist in den Figuren 3A bis 3D gezeigt.

Wie eingangs beschrieben, wird die Welle 3 in die Zentralbohrung 24 des ringförmigen Nasenstücks 23 und die Zentralbohrung 25des Grundkörpers 22 geschoben. Dabei wird eine grosse Zugkraft P1 (cf. Fig. 3A) parallel zur Werkstück-Spindelachse A aufgebracht, um das Zahnradwerkstück 1 samt Welle 3in die Spannvorrichtung 20 hinein zu ziehen und dort zu halten. Dabei wird die Ferse 4 (cf. Fig. 3A) des Zahnradwerkstücks 1 gegen die ringförmige Plananlagefläche 26 (cf. Fig. 3B) gezogen. Das flache Aufliegen der beiden Flächen wird als Planauflage bezeichnet.

Um Torsionsschwingungen zu vermeiden, die sich ergeben können, wenn sich das Zahnradwerkstück 1 erwärmt und axial ausdehnt, ist ein Teilbereich der ringförmigen Plananlagefläche 26 bei allen entsprechenden Ausführungsformen federnd ausgelegt.

Bei dem Ausführungsbeispiel der Figuren 3A bis 3D ist zu diesem Zweck im Bereich der Plananlagefläche 26 eine umlaufende Nut 31 vorgesehen. Diese Nut 31 kann zum Beispiel so angeordnet/ausgebildet sein, dass sie sich von einer äusseren Zylinder- oder Kegelmantelfläche 29 radial in Richtung der zentralen Werkstück-Spindelachse A erstreckt. Eine solche aussen umlaufende Nut 31 wird auch als Ausseneinstich bezeichnet.

Das Anbringen einer solchen umlaufenden Nut 31 erlaubt es eine federnde Rückstellkraft zu definieren. Da diese Rückstellkraft möglichst genau an die gegebenen Umstände (d.h. an die auftretenden Kräfte und die zu erwartende Wärmeausdehnung) angepasst sein sollte, kann man durch die Positionierung und/oder Dimensionierung der umlaufenden Nut 31 die Rückstellkraft relativ genau einstellen.

Es kann z.B. eine Finite-Elemente Methode zu Berechnung der Rückstellkraft eingesetzt werden.

Auf die Federeigenschaften dieses Teils haben die geometrische Gestaltung (z.B. Nuttiefe, Nutform, Nutposition) und die Materialeigenschaften (E-Modul des Nasenstücks 23) einen Einfluss. Bei dem gezeigten Ausführungsbeispiel können die radiale Tiefe Tr und auch der axiale Abstand Aa zur Plananlagefläche 26 vorgegeben werden, um die federnde Rückstellkraft zu definieren. Weiterhin kann z.B. auch die lichte Weite der Nut 31 (gemessen in axialer Richtung) einen Einfluss auf die "Beweglichkeit/Verformbarkeit" des überhängenden Materialbereichs 30 des Nasenstücks 23 haben. Um so grösser die lichte Weite der Nut 31 ist, umso mehr Bewegungsspielraum oder Platz zum Verformen hat dieser Materialbereich 30. Bei einer geringen lichten Weite hingegen kann sich die Nut 31 beim Auftreten von axial gerichteten Kräften relativ schnell schliessen. Nach dem Schliessen der Nut 31 ist die elastische Wirkung quasi aufgehoben.

Die Zugkraft P1, die parallel zur Werkstück-Spindelachse A aufgebracht wird, wird vorzugsweise bei allen Ausführungsformen mittels einer konzentrisch angeordneten Spannzange 32, oder einer Anzahl von Klammern oder Armen auf die Welle 3 des Zahnradwerkstücks 1 übertragen. Zu diesem Zweck umgreifen oder umschliessen diese Elemente einen Abschnitt der Welle 3.

Bei dem in den Figuren 3A bis 3D gezeigten Ausführungsbeispiel kommt eine konzentrisch angeordnete Spannzange 32 zum Einsatz, die einen werkstückseitigen Bereich der Welle umschliesst. Diese Spannzange 32 weist in seinem vom Zahnradwerkstück 1 abgewandten Bereich B (cf. Fig. 3A) eine ringförmig umlaufende, konische Mantelfläche auf. Außerdem ist die Spannzange 32 in axialer Richtung geschlitzt, um an die Welle 3 angepresst werden zu können.

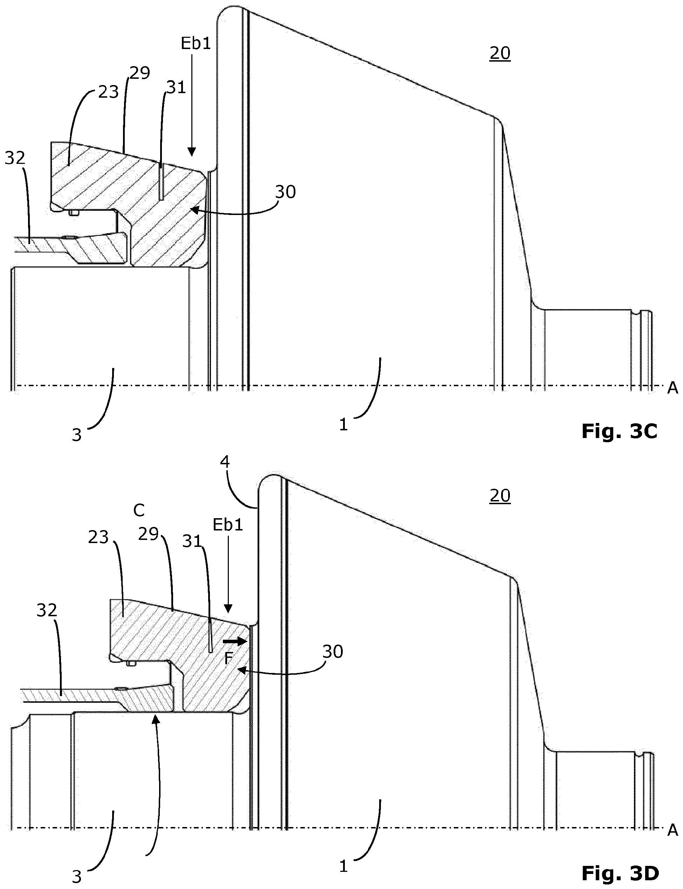

In den Figuren 3A - 3D sind Details einer Doppelspannzange gezeigt. In dem Bereich B wird die Spannzange 32 von einem Zangeneinsatz 33 umschlossen. Dieser Zangeneinsatz 33 weist im Bereich B eine ringförmig umlaufende, konische Innenfläche auf. Wenn nun, wie in Fig. 3A durch den nach links weisenden Pfeil P1 angedeutet, eine Zugkraft auf den Zangeneinsatz 33 ausgeübt wird, so verlagert sich die konische Innenfläche des Zangeneinsatzes 33 relativ zur konischen Mantelfläche der Spannzange 32 und die Spannzange 32 wird mit einer nach innen weisenden Wandung fest gegen die Welle 3 gepresst. Im Bereich B drückt eine Kraft im Wesentlichen radial auf die Welle 3. Da es sich hier um eine Doppelspannzange handelt, drückt die Spannzange 32 zusätzlich auch im Bereich C (siehe Fig. 3D) radial auf die Welle 3. Gleichzeitig zu diesen radial gerichteten Kräften, wird eine Zugkraft in axialer Richtung aufgebracht. Diese Zugkraft zieht das Zahnradwerkstück 1 gegen die ringförmige Plananlagefläche 26 des Nasenstücks 23 und in die Spannvorrichtung 20 hinein.

Statt einer Doppelspannzange kann bei allen Ausführungsformen auch eine Einfachspannzange zum Einsatz kommen.

In Fig. 3C ist die Situation mit nicht gespanntem Zahnradwerkstück 1 gezeigt. Die umlaufende Nut 31 hat ihre ursprüngliche lichte Weite (in axialer Richtung gemessen). In Fig. 3D ist die Situation mit gespanntem Zahnradwerkstück 1 gezeigt. Man kann der Fig. 3D entnehmen, dass der Materialbereich 30 leicht verformt wurde. Aufgrund der "Beweglichkeit/Verformbarkeit" des Materialbereichs 30 des Nasenstücks 23 ergibt sich eine Rückstellkraft F (cf. Fig. 3D), die im Wesentlichen in axialer Richtung gegen die Ferse 4 des Zahnradwerkstücks 1 drückt.

Das Zahnradwerkstück 1 wird aufgrund der Kraft, die im Bereich C radial auf die Welle 3 einwirkt, und durch den Formschluss, der zwischen Ferse 4 und der ringförmigen Plananlagefläche 26 in axialer Richtung wirkt, gespannt. Im Bereich C wirken im Wesentlichen Reibkräfte. Auch im Bereich zwischen der ringförmigen Auflagefläche 26 und der Ferse 4 wirken in tangentialer Richtung (an einem Kreis in der Ebene E) Reibkräfte.

Falls sich nun aufgrund erhöhter Temperaturen der Kopfbereich 2 in Fig. 3D nach rechts verlagern sollte, so folgt der Materialbereich 30 dieser Bewegung und es bleibt auch weiterhin eine Plananlage erhalten. Dadurch, dass die Plananlage erhalten bleibt, bleiben auch die in tangentialer Richtung wirkenden Reibkräfte bestehen. Dadurch werden Torsionsschwingungen unterbunden oder wirksam reduziert.

Sollte sich im Zuge einer Bearbeitung des Zahnradwerkstücks 1 die Welle 3 in axialer Richtung ausdehnen, so bleibt aufgrund der "Beweglichkeit/Verformbarkeit" des Materialbereichs 30 des Nasenstücks 23 weiterhin eine Plananlage zwischen der Ferse 4 und der ringförmigen Plananlagefläche 26 erhalten, was wichtig ist, um die erwähnten Torsionsschwingungen zu vermeiden oder deutlich zu reduzieren.

Bisher wurden Ausführungsformen der Spannvorrichtung 20 beschrieben, die ein separates Nasenstück 23 aufweisen. Ein solches Nasenstück 23 kann z.B. eingesetzt werden, um eine universelle Spannvorrichtung 20 an die Geometrie und Dimension des Zahnradwerkstücks 1 anzupassen.

Statt ein Nasenstück 23 einzusetzen, kann die Spannvorrichtung 20 als solche die beschriebene "Beweglichkeit/Verformbarkeit" eines Materialbereichs 30 aufweisen. Die Funktionsweise ist in diesem Fall dieselbe. Bei einer Ausführungsform mit Nasenstück 23, wie in Fig. 2C gezeigt, befindet sich die umlaufende Nut 31 am Nasenstück 23 im Bereich Eb1 des Nasenstücks 23.

Wenn bei diesem Ausführungsbeispiel das Nasenstück 23 entfällt, dann befindet sich die umlaufende Nut 31 an dem Grundkörper 22 im werkstücknahen Bereich.

Eine Ausführungsform mit Nut 31 an dem Grundkörper 22 ist nicht in den Figuren gezeigt, lässt sich aber aus den Figuren und aus der Beschreibung ableiten.

Bei denjenigen Ausführungsformen, die eine umlaufende Nut 31 im werkstücknahen Bereich an dem Grundkörper 22 aufweisen, sind die Spannzange 32 und der Zangeneinsatz 33 anders ausgebildet und/oder angeordnet. Die Funktionsweise dieser Elemente kann jedoch dieselbe sein.

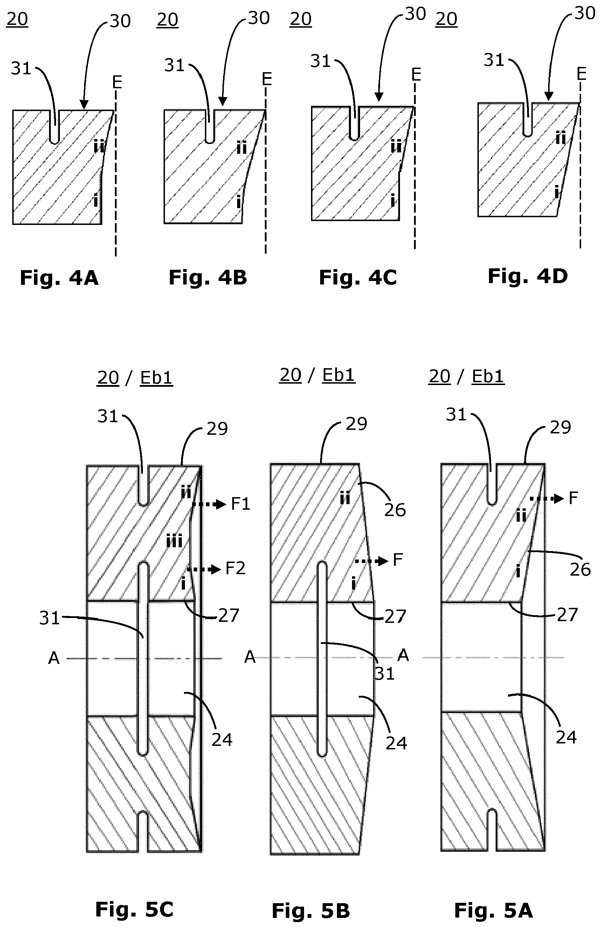

Bei mindestens einem Teil der Ausführungsformen kann die Plananlagefläche 26 so durch Drehen bearbeitet sein, dass sie einen inneren ringförmigen Bereich **i** aufweist, der eben ist und senkrecht zu der Werkstück-Spindelachse A verläuft. Dieser innere ringförmige Bereich **i** kann von einem äusseren ringförmigen Bereich **ii** umgeben sein, der leicht nach aussen konisch ansteigt. Ein entsprechendes Beispiel ist in Fig. 4C als Ausschnitt der Spannvorrichtung 20 gezeigt. Um die Lage der Fläche, die von der Ferse 4 aufgespannt wird, zu zeigen, ist hier die Ebene E als strichlierte Linie eingezeichnet. Die Ebene E bezeichnet die Anschlagebene des Zahnradwerkstücks 1. Fig. 4C zeigt den nicht gespannten Zustand.

Wenn nun das Zahnradwerkstück 1 mit grosser Kraft P1 angezogen wird, so verformt sich der äussere ringförmige Bereich **ii** während sich die lichte Weite der Nut 31 reduziert. Es kommt dann zu einer kompletten Plananlage am inneren und äusseren ringförmigen Bereich **i** und **ii,** wie beispielweise in Fig. 3D zu erkennen ist.

In den Figuren 4A, 4B und 4D sind drei weitere beispielhafte Ausführungsformen gezeigt.

Fig. 4A zeigt den nicht gespannten Zustand einer Ausführungsform, bei welcher der innere ringförmige Bereich **i** eben ist und senkrecht zu der Werkstück-Spindelachse A verläuft. Der äussere ringförmige Bereich **ii** hat hingegen einen leicht konkaven Verlauf.

Fig. 4B zeigt den nicht gespannten Zustand einer Ausführungsform, bei welcher der innere ringförmige Bereich **i** in den äusseren ringförmigen Bereich **ii** übergeht. Beide Bereiche **i** und **ii** haben einen leicht konkaven Verlauf.

Fig. 4D zeigt den nicht gespannten Zustand einer Ausführungsform, bei welcher der innere ringförmige Bereich **i** in den äusseren ringförmigen Bereich **ii** übergeht. Beide Bereiche **i** und **ii** haben einen geradlinigen Verlauf mit gleichbleibender Steigung.

Die Ausführungsformen der Figuren 4A - 4D und 5A - 5C sind lediglich als Beispiele zu verstehen. Auch sind die radiale Tiefe Tr und der axiale Abstand Aa (siehe Fig. 3B) als Beispiele zu verstehen.

In den Figuren 5A, 5B und 5C ist jeweils eine schematische Schnittansicht des werkstücknahen Endbereichs Eb1 einer weiteren Spannvorrichtung 20 im nicht gespannten Zustand dargestellt.

In allen drei Fällen weist der werkstücknahe Endbereich Eb1 eine äussere Zylindermantelfläche 29 auf (es kann auch eine Kegelmantelfläche 29 zum Einsatz kommen, deren Umfang sich in Richtung des Zahnradwerkstücks reduziert). Bei der Ausführungsform der Fig. 5A ist eine umlaufende Nut 31 (als Ausseneinstich) vorgesehen, die sich von der Zylindermantelfläche 29 der Spannvorrichtung 20 radial in Richtung der Werkstück-Spindelachse A erstreckt. Bei der Ausführungsform der Fig. 5B hingegen ist eine umlaufende Nut 31 (als Inneneinstich) vorgesehen, die sich von einer Innenfläche 27 der Zentralbohrung/Aufnahmeöffnung 24 der Spannvorrichtung 20 radial nach aussen erstreckt. Bei der Ausführungsform der Fig. 5C sind zwei umlaufende Nuten 31 (als Aussen- und Inneneinstich) vorgesehen. Die Ausführungsform der Fig. 5C weist eine umlaufende Nut 31 gemäß Fig. 5A und eine umlaufende Nut 31 gemäß Fig. 5B auf.

Die umlaufende Nut 31 spannt in allen drei Fällen eine Ebene auf, die senkrecht zur Werkstück-Spindelachse A steht. Die umlaufende Nut 31 kann jedoch bei allen Ausführungsformen auch einen leicht schrägen Verlauf haben. Die umlaufende Nut 31 kann bei allen Ausführungsformen auch einen gekrümmten (z.B. bogenförmigen) Verlauf haben, wobei das Herstellen einer solchen Nut 31 deutlich aufwendiger ist. Bei der Ausführungsform der Fig. 5C können die beiden umlaufende Nuten 31 auch in unterschiedlichen Ebenen liegen.

Wie bei der Ausführungsform der Fig. 4D, geht bei den Ausführungsformen der Figuren 5A und 5B der innere ringförmige Bereich **i** in den äusseren ringförmigen Bereich **ii** über. D.h. es ergibt sich im nicht gespannten Zustand eine ebene Plananlagefläche 26, die hier leicht schräg zur Werkstück-Spindelachse A steht. Von der Werkstückseite aus betrachtet, bildet die Plananlagefläche 26 bei der Ausführungsform der Fig. 5A einen konkaven Bereich. Von der Werkstückseite aus betrachtet, bildet die Plananlagefläche 26 bei der Ausführungsform der Fig. 5B einen konvexen Bereich. Bei der Ausführungsform der Fig. 5A ergibt sich im gespannten Zustand eine Rückstellkraft F, die in radialer Richtung weiter aussen ansetzt als bei der Ausführungsform der Fig. 5B.

Die Ausführungsform der Fig. 5C stellt eine Kombination der Ausführungsformen der Figuren 5A und 5B dar. Die Plananlagefläche 26 wird im nicht gespannten Zustand aus drei ringförmigen Bereichen **i, ii** und **iii** gebildet. Der innere ringförmige Bereich **i** verläuft schräg zur Werkstück-Spindelachse A, der mittlere ringförmige Bereich **iii** steht senkrecht zur Werkstück-Spindelachse A und der äussere ringförmige Bereich **ii** verläuft schräg zur Werkstück-Spindelachse. Bei der Ausführungsform der Fig. 5C ergeben sich im gespannten Zustand zwei Rückstellkräfte F1, F2, wie gezeigt.

Da die jeweilige Rückstellkraft F erst im gespannten Zustand auftritt, sind die Pfeile in den Figuren 5A, 5B und 5C strichliert.

**Bezugszeichenliste:**

| | |
|---|---|
| Zahnradwerkstück / Kegelrad / Ritzel | 1 |
| Kopfbereich / Kegelbereich / Kegelmantel | 2 |
| Welle / Ritzel-Schaft | 3 |
| Ferse / Axialanlagenabsatz am Zahnradwerkstück | 4 |
| | |
| (Zahnrad-)Maschine | 10 |
| | |
| Verkleidung | 11 |
| Sichtfenster | 12 |
| | |
| Spannvorrichtung | 20 |
| Spannstange | 21 |
| (Spannvorrichtungs-) Grundkörper | 22 |
| konischer Bereich / Aussenkonus | 22.1 |
| Flansch | 22.2 |
| Nasenstück / Zentrierbüchse | 23 |
| Zentralbohrung / Aufnahmeöffnung der Zentrierbüchse | 24 |
| Zentralbohrung / Aufnahmeöffnung | 25 |
| ringförmiger Anschlussflansch/ Auflagefläche / Plananlagefläche | 26 |
| Innenfläche | 27 |
| (äussere) Zylinder- oder Kegelmantelfläche / Außenkegel der Zentrierbüchse | 29 |
| Materialbereich | 30 |
| umlaufende Nut / Einstich Federfreiraum | 31 |
| Spannzange / Ringkörper, Klammer, Arm | 32 |
| Zangeneinsatz / Spannhülse | 33 |
| (äussere) Zylinder- oder Kegelmantelfläche / äussere Mantelfläche / Außenkegel des Grundkörpers | 34 |
| | |
| Werkstück-Spindelachse | A |
| axialer Abstand | Aa |
| Bereich | B |
| Bereich | C |
| Ebene / Anschlagebene des Zahnradwerkstücks | E |
| werkstückseitiger Endbereich / Anschlagsfläche Zentrierbüchse | Eb1 |
| Rückstellkraft | F |
| Rückstellkräfte | F1, F2 |
| innerer ringförmiger Bereich | i |
| äusserer ringförmiger Bereich | ii |
| mittlerer ringförmiger Bereich | iii |
| radiale Tiefe | Tr |
| Pfeil/Zugkraft | P1 |

## Patentansprüche

1. Spannvorrichtung (20) mit einer zentralen Aufnahmeöffnung (24, 25), die konzentrisch zu einer Werkstück-Spindelachse (A) angeordnet ist, wobei
- die Spannvorrichtung (20) zum Einspannen eines Zahnradwerkstücks (1) ausgelegt ist, das einen Kopfbereich (2) und eine Welle oder einen Schaft (3) umfasst,
- die Spannvorrichtung (20) eine ringförmige Plananlagefläche (26) umfasst, die
• konzentrisch zu der Werkstück-Spindelachse (A) angeordnet ist,
• sich in einem werkstückseitigen Endbereich (Eb1) der Spannvorrichtung (20) befindet, und
• die im Wesentlichen senkrecht zur Werkstück-Spindelachse (A) verläuft,
**dadurch gekennzeichnet, dass** in dem werkstückseitigen Endbereich (Eb1) mindestens eine umlaufende Nut (31) vorgesehen ist,
• die sich von einer Aussenfläche (29) der Spannvorrichtung (20) radial in Richtung der Werkstück-Spindelachse (A) und/oder
• die sich von einer Innenfläche (27) der Spannvorrichtung (20) in Bezug zu der Werkstück-Spindelachse (A) radial nach aussen
erstreckt und die der Spannvorrichtung (20) im Bereich der Plananlagefläche (26) eine Elastizität verleiht.

2. Spannvorrichtung (20) gemäß Anspruch 1, **dadurch gekennzeichnet, dass** diese einen Grundkörper (22) mit der Aufnahmeöffnung (25) umfasst,
- wobei der Grundkörper (22) in dem werkstückseitigen Endbereich (Eb1) eine äussere Mantelfläche (34) aufweist und wobei sich die umlaufende Nut (31) ausgehend von dieser Mantelfläche (34) radial in Richtung der Werkstück-Spindelachse (A) erstreckt, und/oder
- wobei der Grundkörper (22) in dem werkstückseitigen Endbereich (Eb1) eine Innenfläche aufweist und wobei sich die umlaufende Nut (31) ausgehend von dieser Innenfläche in Bezug zu der Werkstück-Spindelachse (A) radial nach aussen erstreckt.

3. Spannvorrichtung (20) gemäß Anspruch 1, **dadurch gekennzeichnet, dass** diese ein Nasenstück (23) mit der Aufnahmeöffnung (24) umfasst,
- wobei das Nasenstück (23) in dem werkstückseitigen Endbereich (Eb1) eine äussere Mantelfläche (29) aufweist und wobei sich die umlaufende Nut (31) ausgehend von dieser Mantelfläche (29) radial in Richtung der Werkstück-Spindelachse (A) erstreckt, und/oder
- wobei das Nasenstück (23) in dem werkstückseitigen Endbereich (Eb1) eine Innenfläche (27) aufweist und wobei sich die umlaufende Nut (31) ausgehend von dieser Innenfläche (27) in Bezug zu der Werkstück-Spindelachse (A) radial nach aussen erstreckt.

4. Spannvorrichtung (20) gemäß einem der Ansprüche 1 bis 3, **dadurch gekennzeichnet, dass** sie ein Zahnradwerkstück (1) umfasst, das im Kopfbereich (2) eine Ferse (4) mit einer rückwärtigen Fersenfläche aufweist, die im Wesentlichen parallel zu einer Ebene (E) liegt, die senkrecht zur Werkstück-Spindelachse (A) verläuft, wenn die Welle (3) des Zahnradwerkstücks (1) in der Aufnahmeöffnung (24, 25) steckt.

5. Spannvorrichtung (20) gemäß Anspruch 4, **dadurch gekennzeichnet, dass** sie Mittel (32, 33) zum Aufbringen einer axialen Zugkraft (P1) umfasst, die parallel zur Werkstück-Spindelachse (A) wirkt, wobei die Mittel (32, 33) mittels Reibschluss an der Welle (3) ansetzen, um das Zahnradwerkstück (1) samt Welle (3) in die Aufnahmeöffnung (24, 25) zu ziehen.

6. Spannvorrichtung (20) gemäß Anspruch 4 oder 5, **dadurch gekennzeichnet, dass** das Zahnradwerkstück (1) in einem gespannten Zustand mittels eines Reibschlusses im Bereich der Welle (3) und mittels eines Formschlusses zwischen der ringförmigen Auflagefläche (26) und der rückwärtigen Fersenfläche der Ferse (4) eingespannt ist, wobei beim Einspannen die umlaufende Nut (31) ihre Form verändert und sich dadurch in der Spannvorrichtung (20) eine Rückstellkraft (F, F1, F2) ergibt.

7. Spannvorrichtung (20) gemäß Anspruch 6, **dadurch gekennzeichnet, dass** die Rückstellkraft (F, F1, F2) im gespannten Zustand im Wesentlichen in axialer Richtung auf die rückwärtige Fersenfläche der Ferse (4) wirkt.

8. Spannvorrichtung (20) gemäß einem der Ansprüche 4 oder 5, **dadurch gekennzeichnet, dass** sich zwischen der rückwärtigen Fersenfläche der Ferse (4) und der ringförmigen Plananlagefläche (26) sowohl ein Formschluss als auch ein Reibschluss ergeben, die auch bei einer temperaturbedingten Ausdehnung des Zahnradwerkstücks (1) erhalten bleiben.
